# EUROPEAN PATENT APPLICATION

(11) **EP 4 803 732 A1**
(43) Date of publication of application: **09.09.2026**
(21) Application number: 26159684.5
(22) Date of filing: 19.02.2026
(51) Int. Cl.: F02C 7/057

(54) **MACHINE AND PROCESS TO REDUCE MASS FLOW LOSS IN SUPERSONIC FLOW**

(30) Priority: 04.03.2025 US 202519069844
(71) Applicant: The Boeing Company, Arlington, VA 22202 (US)
(72) Inventor: BETANCES DELGADO, LUIS EDUARDO, Arlington, 22202 (US); ROODE, MATTHEW JAMES, Arlington, 22202 (US)
(74) Representative: Lissandrini, Marco

(57) **Abstract**

A machine and process configured to control bleed-off from an airflow and/or reduce a drag of an inlet. The machine may include: a panel that may include a porous section that comprises: a length; a flow side; and a channel side; a channel that surrounds the porous section and contains a carriage adjacent to the panel, wherein the carriage comprises: a flow side; a translation component; a channel side connected to a first rigid link and to a second rigid link; a bleed gap; and a number of pressure taps; a cylinder that comprises: a forward end; an aft end; a piston connected to: a forward rod that extends out of the forward end of the cylinder; and an aft rod that extends out of the aft end of the cylinder; a number of chambers; and a bias device connected to: the aft rod; and the channel.

## Description

### BACKGROUND INFORMATION

### 1. Field:

The present disclosure relates generally to controlling air flow. In particular, embodiments herein relate to controlling mass bleed-off from an airflow. More specifically embodiments herein relate to controlling mass bleed-off from air flowing at supersonic speeds.

### 2. Background:

Thrust output from an air-breathing engine depends upon a mass of airflow into the air-breathing engine. Due to numerous factors, controlling the mass of an airflow into the engine may be difficult to stabilize when a speed of the vehicle and/or airflow in an inlet to the engine varies across a range that includes supersonic values. When a shockwave impinges on a surface, it generates a rapid rise in static pressure, creating an adverse pressure gradient that acts against the airflow within the boundary layer, slowing down the airflow and potentially causing it to separate from the surface. Stronger shockwaves create a larger rise in the static pressure and are more likely to cause boundary layer separation.

As speed varies, a location of a shockwave along a surface may move. It may be beneficial in achieving the desired mass and flow characteristics of air entering the engine to bleed-off some of the mass of the airflow, at a location where a shockwave impinges a panel of the inlet to the engine, before the airflow enters a compressor section of the engine.

One way that shockwave induced flow separation of airflow along a surface has been reduced is to place bleed holes in the vicinity where the shockwave strikes the boundary layer. To accommodate typical flight envelopes for an air-breathing engine, an inlet to the air-breathing engine is often designed to include a bleed-off system used to bleed air off some of the airflow into the engine. However, at any specific flight condition, where a bleed air section of an inlet is in a fixed location in an inlet, an amount of air bled off from airflow into the engine though a fixed location may be greater or less than that needed to bleed-off an optimal mass from the airflow to deliver a mass of air in a state that provides the airflow needed by the engine to produce a desired amount of thrust. Currently, to ensure a mass of air is bled off the airflow in an inlet to an air-breathing engine at effective locations for an expected operating range of the engine, a size and/or number of bleed portions of the inlet are greater than they would need to be if they could be moved and/or resized in flight.

Achieving a necessary amount of mass bleed-off, without exceeding the necessary amount of mass bleed-off has been challenging to achieve. An alternate approach tried has been to install bleed air systems that might vary size, location, and/or bleed volumes, but these designs have added a complexity and resultant reliability issues as well as undesired weight to the inlet.

Therefore, it would be desirable to have a machine and process that take into account at least some of the issues discussed above, as well as other possible issues. For example, it would be desirable to have a machine and process that overcome at least a technical problem with bleeding off a precise amount of mass from airflow into an engine, at locations that may vary with a changing speed of the airflow, that is not complex and weighty compared to the inlet, as well as other problems.

### SUMMARY

Embodiments of the present disclosure provide a machine and process configured to control bleed-off from an airflow and/or reduce a drag of an inlet. The machine may include: a panel that may include a porous section that comprises: a length; a flow side; and a channel side; a channel that surrounds the porous section and contains a carriage adjacent to the panel, wherein the carriage comprises: a flow side; a translation component; a channel side connected to a first rigid link and to a second rigid link; a bleed gap; and a number of pressure taps; a cylinder that comprises: a forward end; an aft end; a piston connected to: a forward rod that extends out of the forward end of the cylinder; and an aft rod that extends out of the aft end of the cylinder; a number of chambers; and a bias device connected to: the aft rod; and the channel.

Illustrative embodiments of the present disclosure illustrate a process of controlling bleed-off from an airflow to an engine. The process may begin with placing a panel, comprising a porous section comprising a flow side and a channel side, in an inlet to the engine. The process may continue with adjoining a carriage, comprising a bleed-gap, along the channel side of the porous section. The process may continue with connecting the carriage to a translation control. The process may continue with receiving, in the translation control, a number of static pressures from a number of pressure-taps in the carriage. The process may continue with using a difference in the number of static pressures for moving a portion of the translation control and the carriage. The process may continue with bleeding a mass from the airflow through the bleed-gap.

The inlet may be for a jet engine, a turbojet engine, a pulsejet, a ramjet engine, a scramjet engine, or a rotating detonation engine. The translation control may include a cylinder that may include an aft chamber, and the number of pressure-taps may include a forward pressure tap connected to the aft chamber in the cylinder. The airflow may be supersonic. The airflow may flow along a length of the porous section and form a shockwave impinging along the porous section.

The process of controlling bleed-off from an airflow to an engine may also include the translation control translating the carriage adjacent to the channel side of the porous section. The translation control comprises a cylinder that comprises a piston that is connected to: a forward rod connected to a forward rigid link connected to the carriage; and an aft rod connected to an aft rigid link connected to the carriage. In process 800, the cylinder may remain stationary relative to the panel.

Illustrative embodiments of the present disclosure illustrate a process of reducing a drag of an inlet. The process may begin with reducing a bleed-off of airflow required to produce a desired thrust from the engine via at least: tapping differential static pressures along the inlet; using a difference in the static pressures for moving a piston connected to a rod connected to a carriage comprising a bleed gap translating over a porous section of a panel of the intake; and bleeding off mass from the supersonic airflow through the bleed gap. The process of reducing a drag of an inlet may also include the inlet experiencing supersonic airflow and repeating the above process as a changing speed of the supersonic airflow changes a location along the porous section of an impingement of a shockwave.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a cross-sectional view of a machine configured to bleed-off a mass of air from an airflow along a surface, in accordance with an illustrative embodiment;
**Figure 2** is a cross-sectional view of a machine configured to bleed-off a mass of air from an airflow along a surface, in accordance with an illustrative embodiment;
**Figure 3** is a cross-sectional view of a machine configured to bleed-off a mass of air from an airflow along a surface, in accordance with an illustrative embodiment;
**Figure 4** is a cross-sectional view of a machine configured to bleed-off a mass of air from an airflow along a surface, in accordance with an illustrative embodiment;
**Figure 5** is a cross-sectional view of a machine configured to bleed-off a mass of air from an airflow along a surface, in accordance with an illustrative embodiment;
**Figure 6** is a cross-sectional side view of porous sections in a surface, in accordance with an illustrative embodiment;
**Figure 7** is a perspective view of a cross-section of a carriage for a bleed air machine, in accordance with an illustrative embodiment;
**Figure 8** is a flow chart illustration of a process of controlling bleed-off from an airflow to an engine, in accordance with an illustrative embodiment;
**Figure 9** is a flow chart illustration of a process for reducing a drag of an inlet, in accordance with an illustrative embodiment;
**Figure 10** is an illustration of an aircraft manufacturing and service process in accordance with an illustrative embodiment;
**Figure 11** is an illustration of a block diagram of an aerospace vehicle in which an illustrative embodiment may be implemented; and
**Figure 12** is an illustration of a block diagram of a product management system in accordance with an illustrative embodiment.

### DETAILED DESCRIPTION

The illustrative embodiments recognize and take into account one or more different considerations as described herein. The illustrative embodiments recognize and take into account that a technological improvement is needed to provide a machine and/or process for controlling a precise location for bleeding air from a mass of an airflow into an air-breathing engine.

The illustrative embodiments recognize and take into account that a rapid pressure rise across a shockwave thickens a boundary layer of an airflow along a surface, making it more prone to separation, especially when the pressure gradient becomes adverse. When a shockwave hits a surface, the interaction with the boundary layer of airflow along the surface can lead to significant flow separation, causing increased drag, pressure losses, and potential instability issues. Thus, where the shockwave impinges on a surface, the sudden pressure change can cause the boundary layer of airflow to separate, creating a region of unstable and/or turbulent and/or recirculating flow at the impingement point. Bleeding air off the airflow along the surface at this location can help prevent and/or reduce this separation by energizing and thinning the boundary layer and thereby maintaining the airflow more attached to the surface and improving aerodynamic performance, particularly in supersonic aerospace vehicle designs.

The illustrative embodiments recognize and take into account that current systems in an inlet of an air-breathing engine that bleed-off air have an extended length or a series of bleed sections in order to cover a range of locations for bleeding off mass from airflow into the air-breathing engine. Hence, current bleed air sections are usually larger/longer than would be needed if a bleed of an optimal size could be placed and/or moved as a shockwave moves to an optimal location, and thus bleed-off more mass from the airflow than is desired and/or produces a less than desired state of the airflow into the air-breathing engine. Thus, with a less than optimal mass of air or state of airflow entering the air-breathing engine, less than desired thrust may be produced or a higher capacity thrust engine may be designed to account for suboptimal performance issues.

The illustrative embodiments recognize and take into account that a machine and/or process that can move a location of bleed-off can be moved as a speed of the airflow changes that a smaller amount of mass of air may be bled off the airflow into the air-breathing engine at least because an oversized bleed-off section of the inlet will no longer be needed/used to ensure that mass is being bled off at a particular desired location.

The illustrative embodiments recognize and take into account that optimizing a performance of an inlet for delivering an appropriate mass of air to an air-breathing engine may send a higher proportion of the air entering the inlet into the engine and thereby allow for design and production of a smaller inlet size for a given engine and/or a higher thrust output for a given engine. One of ordinary skill in the art recognizes that these technological improvements also may provide technological improvements overall for a vehicle powered by the air-breathing engine that may include without limitation: a reduction in effective drag, a reduction in weight and associated performance benefits, an increase in thrust and associated improvements.

The illustrative embodiments recognize and take into account that with improved thrust performance for any given engine, that a further technological improvement may include choosing to design and/or manufacture the vehicle with a more efficient choice of engine for the vehicle that may provide further improvements overall that may include without limitation a reduction in drag and or a reduction in weight and associated performance benefits for the vehicle overall.

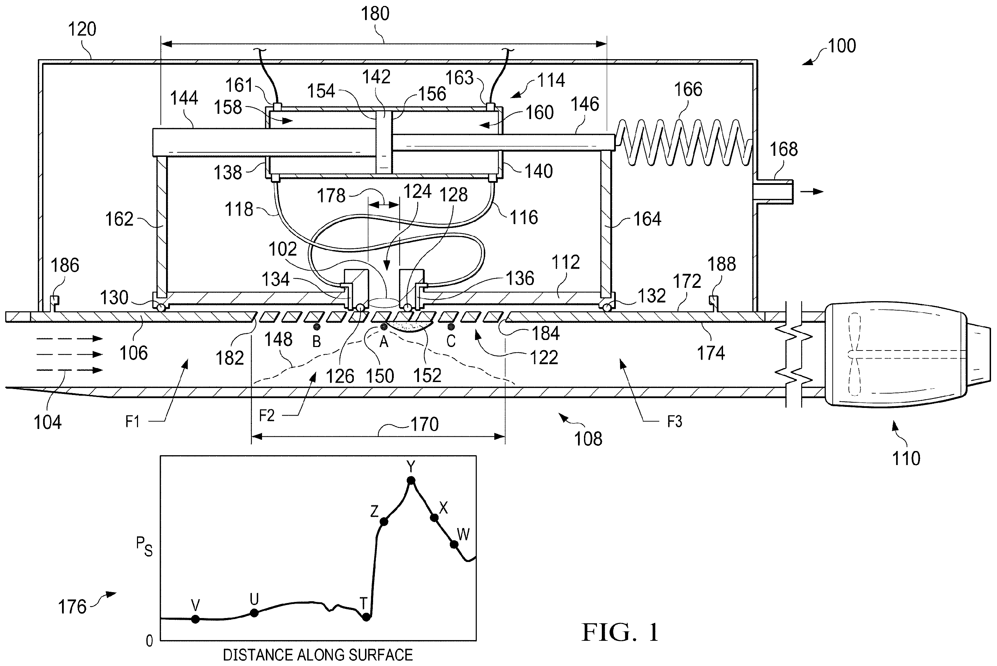

With reference now to the figures and in particular, with reference to **Figure 1****,** a cross-sectional view is shown of a machine configured to bleed-off a mass of air from an airflow along a surface, in accordance with an illustrative embodiment. More specifically, machine **100** is configured to bleed-off a mass **102** of air from airflow **104** along surface **106.** Without limitation surface **106** may be a panel. Without limitation panel/surface **106** may be part of a wall of inlet **108** into air-breathing engine **110.** Inlet **108** and engine **110** are shown in relation with machine **100,** but due to illustration size limits, not shown sized proportionally to machine **100.** Without limitation, air-breathing engine **110** may be a jet engine, a turbojet engine, a pulsejet, a ramjet engine, a scramjet engine, or a rotating detonation engine. Machine **100** may be called a bleed-off device or an airflow **104** control device. Machine **100** may include carriage **112,** cylinder **114,** forward tube **116,** aft tube **118,** channel **120,** and porous section **122** of surface **106.**

Carriage **112** may include bleed-gap **124,** forward bleed-gap seal **126,** aft bleed-gap seal **128,** forward seal **130,** aft seal **132,** forward pressure-tap **134,** and aft pressure-tap **136.** Cylinder **114** may have forward end **138** and aft end **140.** Cylinder **114** may contain piston **142** connected to forward rod **144** and aft rod **146.** Cylinder **114** is fixed relative to porous section **122.** Without limitation, although not shown in **Figure 1** or subsequent figures, cylinder **114** may be connected to channel **120.** In other words, while forward rod **144** and aft rod **146** translate relative to porous section **122,** cylinder **114** does not translate relative to porous section **122.** Because cylinder **114** does not translate relative to porous section **122** but piston **142** within cylinder **114** and carriage **112** connected to piston **142** do translate relative to porous section **122,** cylinder **114** and piston **142** may be considered to be a translation control in machine **100.**

Also seen in **Figure 1** is shockwave **148** impinging on surface **106** at point **A.** Shown just down-flow from impingement point **150** is separated flow 152. Separated flow is a portion of a boundary layer of airflow **104** that separates away from surface **106.** A size and/or turbulence of an amount of separated flow may be reduced and/or minimized by bleeding an appropriate mass **102** of air bled off of airflow **104** through bleed-gap **124** at impingement point **150.** By not bleeding off air from airflow **104** across the entire porous section **122** as is common in current inlet **108** designs, machine **100** reduces total bleed-off from airflow **104** in inlet **108** and thus provides the technological improvement of increasing a proportion of the mass **102** captured by the inlet **108** that is actually delivered in an acceptable condition to air-breathing engine **110.** Hence, a technological advantage may also be realized for design and/or manufacture, and/or retrofit, whereby because machine **100** makes the inlet **108** more efficient at delivering necessary mass **102** of air into air-breathing engine **110,** a smaller inlet **108** may be used as compared to current inlets and bleed systems that are less efficient. Thus, lighter and lower drag inlets may be used as compared to current inlets and bleed systems that are less efficient for producing a given amount of thrust for a given air-breathing engine. For an engine retrofit with machine **100,** the current air-breathing engine **110** may receive a greater mass **102** of airflow **104** and potentially produce more thrust than is capable with that same air-breathing engine **110** using a current style inlet **108** and bleed system that lacks machine **100.**

Piston **142** may have forward area **154** and aft area **156** and divide cylinder **114** into a forward chamber **158** and an aft chamber **160.** Forward area **154** may be an area of a surface of piston **142** that faces forward chamber **158** of cylinder **114.** Aft area **156** may be an area of a surface of piston **142** that faces aft chamber **160** of cylinder **114.** Forward chamber **158** may have a relief **161** that allows forward chamber **158** to avoid an over pressurization. Aft chamber **160** may have a relief **163** that allows aft chamber **160** to avoid over pressurization.

Forward rod **144** extends out of cylinder **114** and connects to forward rigid link **162** that connects to carriage **112.** Aft rod **146** may extend out of cylinder **114** and connects to aft rigid link **164** that connects to carriage **112** and connects to bias device **166.**

Aft tube **118** may connect aft pressure-tap **136** to forward chamber **158** of cylinder **114.** Forward tube **116** may connect forward pressure-tap **134** to aft chamber **160** of cylinder **114.** Channel **120** may have vent **168.** Vent **168** is configured to allow mass **102** of air bled off of airflow **104** through bleed-gap **124** to flow through and not over pressurize channel **120.**

Porous section **122** is a section of surface **106.** Length **170** of porous section **122** may be sized by a designer and in manufacture based upon expected location of potential shockwaves throughout expected operation range for air-breathing engine **110.** Without limitation, length **170** of porous section **122** may be sized by a designer and in manufacture based upon expected location of potential shockwaves for a selected portion of an expected operation range for air-breathing engine **110.** At least because carriage **112** is sealed against channel side **172** of surface **106,** no significant mass **102** of air bleeds off of airflow **104** across porous section **122** except through bleed-gap **124** into channel **120** where bleed-gap **124** is adjacent to porous section **122.**

Precise location and size of forward pressure-tap **134** and aft pressure-tap **136** are designed to accurately transfer static pressure on flow side **174** of porous section **122** into respective chamber of cylinder **114.** As shown in **Figure 1****,** forward pressure-tap **134** receives static pressure (with a value of Ps_{F1}) from region **F1.** Aft pressure tap **136** senses static pressure (with a value of Ps_{F3}) from region **F3.**

As shown in **Figure 1****,** value of Ps_{F1} may correlate to point **T** on chart **176.** Chart **176** plots static pressure against a distance longitudinally from leading edge of inlet **108** along surface **106** and porous section **122,** and Ps_{F3} may correlate to point **Y** on chart **176.** Point **Z** in chart **176** represents relative static pressure at an impingement point **150** for a shockwave **148,** such as without limitation shockwave **148** shown in **Figure 1****.** Point **Z** may represent static pressure (Ps) at pressure spike of a shockwave **148,** whereas point **T** shows a lower value for Ps just prior to the impingement point **150.** When bleed-gap **124** is located as desired for bleed-off that effectively energizes airflow **104** to reduce separated flow, forward pressure-tap **134** may sense Ps (static pressure) of about value at point **T** and pressurize aft chamber **160** of cylinder **114** to that pressure.

Likewise, length **178** of bleed-gap **124** may be based upon a desired amount of mass **102** to be bled off airflow **104** for expected operating speeds and other parameters for inlet **108** and/or air-breathing engine **110.** Desired amount may provide mass **102** flow into air-breathing engine **110** that provides for a specified thrust output from air-breathing engine **110.** Without limitation other parameters may include atmospheric conditions. Without limitation atmospheric conditions may include temperature and density of air entering inlet **108.**

Distance **180** from forward seal **130** of carriage **112** to aft seal **132** of carriage **112** must be long enough for bleed-gap **124** to translate from start **182** of porous section **122** to stop **184** of porous section **122** in surface **106.** Distance **180** from forward edge of carriage **112** to aft end **140** of carriage **112** must be long enough for forward seal **130** of carriage **112** to maintain a seal against channel **120** side of surface **106** up-flow from start **182** of porous section **122** and for aft seal **132** of carriage **112** to maintain a seal against channel **120** side of surface **106** down-flow from stop **184** of porous section **122** in surface **106.**

Forward carriage-stop **186** and aft carriage-stop **188** are positioned to stop carriage **112** translation such that forward seal **130** of carriage **112** maintains a seal against channel **120** side of surface **106** up-flow from start **182** of porous section **122** and for aft seal **132** of carriage **112** to maintain a seal against channel **120** side of surface **106** down-flow from stop **184** of porous section **122** in surface **106.** Forward carriage-stop **186** and aft carriage-stop **188** may be connected to channel **120** side of surface **106,** or to other structural members that form channel **120.**

Forward tube **116** may be formed with a size, strength, flexibility, and/or rigging to remain connected to and deliver static air pressure (Ps_{F1} with bleed-gap **124** and shockwave **148** in locations shown in **Figure 1****)** from along porous section **122** at forward pressure-tap **134** to aft chamber **160** of cylinder **114.** Aft tube **118** may be formed with a size, strength, flexibility, and/or rigging to remain connected to and deliver static air pressure (Ps_{F3} with bleed-gap **124** and shockwave **148** in locations shown in **Figure 1****)** from along porous section **122** at aft pressure-tap **136** to forward chamber **158** of cylinder **114.**

Hence, one of ordinary skill in the art recognizes that a static pressure from forward pressure-tap **134** acts upon aft area **156** of piston **142** to form a force to move piston **142** and connected carriage **112** along channel **120** side of surface **106** forward, away from air-breathing engine **110** while a static pressure from aft pressure-tap **136** acts upon forward area **154** of piston **142** to form a force to move piston **142** and connected carriage **112** along channel **120** side of surface **106** aft, toward air-breathing engine **110.**

Hence, one of ordinary skill in the art recognizes that movement of piston **142,** carriage **112,** and bleed-gap **124** are controlled by design and manufacture sizes for forward area **154** and aft area **156** that provide stabilization of bleed-gap **124** at shock impingement point **150** such that static pressure at forward pressure-tap **134** acting on aft area **156** is equal to static pressure at aft pressure-tap **136** acting on forward area **154** combined with a force applied by bias device **166.** Thus, for specific conditions expected for airflow **104** at selected ranges of speed along surface **106** and/or without limitation within specific geometries of inlet **108,** an expected range for differentials between static pressure at forward pressure-tap **134** and static pressure at aft pressure-tap **136** will be calculable. Thus, differentials between forward area **154** of piston **142** and aft area **156** of piston **142** of any particular designed diameter may be designed by adjusting a diameter of forward rod **144** and/or aft rod **146.**

Likewise, a particular bias provided by bias device **166** may be designed/selected based upon the above design parameters to include a range of movement of aft rod **146.** Without limitation, a force provided by bias device **166** on aft rod **146** may be nonlinear with respect to a displacement of aft rod **146.** Without limitation bias device **166** may be a spring. Without limitation, a spring constant for bias device/spring **166** may be nonlinear. Without limitation a spring force provided by spring may be nonlinear with respect to a displacement of aft rod **146.** Alternatively, bias device **166** may be connected instead to rod **144.** Without limitation alternative configuration for bias device connect to rod **144** may be a tension spring.

In operation, airflow **104** along surface **106** may be supersonic. Chart **176** below machine **100** may be helpful to visualize what static pressures may be sensed at forward pressure-tap **134** and aft pressure tap **136** at various longitudinal distance from leading edge of inlet **108** and their effect on control of position of carriage **112** and bleed-gap **124.** Typically, as Mach number of airflow **104** increases, the curve of static pressure values in chart **176,** including therefore, point **T** and peak point **Y** will move to the right, further into inlet **108** and closer to engine **110.**

Thus, shockwave **148** may impinge surface **106** at an impingement point **150** such as without limitation impingement point **150** shown in **Figure 1** (which may be point **A** in a nonlimiting embodiment as shown in **Figure 1****).** For supersonic flow, airflow **104** in region **F1** relative to impingement point **150** will have a static pressure with a value (such as without limitation point T in static pressure chart **176)** that is lower than a static pressure (such as without limitation point **Z** in static pressure chart **176)** of airflow **104** through region **F2** relative to impingement point **150** and lower than a static pressure with a value (such as without limitation point **Y** in static pressure chart **176)** in region **F3** relative to impingement point **150,** which is also higher than the static pressure with a value (such as without limitation point between points **Y** and **Z** in chart **176)** in region **F2.**

As a non-limiting example, if inlet 108 is flying without limitation at about 19.812 meters, i.e., 65,000 feet, in a freestream of Mach 4.0, region **F1** may be experiencing airflow **104** with a Mach of 3.3 producing a Ps_{F1} value of about 13.789,5 N/m², i.e., 2.0 psia (pounds per square inch absolute), forming shockwave **148** with an angle of 22 degrees from surface **106.** Airflow **104** through region **F2** may slow to Mach 3.0 with a Ps_{F2} of about 22.752,7 N/m², i.e., 3.3 psia. On the down-flow side of shockwave **148** Mach of airflow **104** in region **F3** may drop further down to 2.7 with a Ps_{F3} rise to about 35.163,28 N/m², i.e., 5.1 psia. Thus, a pressure ratio between forward chamber **158** and aft chamber **160** may be 5.1/2.0, or 2.55. Without limitation, in a different freestream and/or another altitude, location of impingement point **150** may be in a different location, and Ps_{F1}, Ps_{F2}, Ps_{F3} values could be 2.8, 4.4, and 6.5 psia. In such a case, a pressure ratio between forward chamber **158** and aft chamber **160** may be 6.5/2.8, or 2.32. As changing pressure ratios between forward chamber 158 and aft chamber **160** act on piston **142,** resulting movement of aft rod **146** are affected by, and affect force generated from bias device **166.**

Alternative (not shown) to the configuration of **Figure 1****,** forward tube **116** and aft tube **118** could be eliminated and bias device **166** could be replaced by an actuator connected to aft rod **146** in place of bias device **166.** Actuator could be driven by a controller that processes static pressure signals transmitted from sensors at forward pressure-tap **134** and aft pressure-tap **136** to the controller for actuator. The controller could be programmed to respond to differentials between static pressures at aft pressure-tap **136** and forward pressure-tap **134** to keep bleed-gap **124** centered over impingement point **150.**

However, alternative configuration introduces mechanical and electronic elements that add weight and complexity beyond that shown by machine **100** shown in **Figure 1** that overcomes current bleed devices that require more mechanical and electronic elements. Greater numbers of mechanical and electronic elements in a bleed system may not only increase weight and complexity but may also reduce a resilience of the bleed system.

In contrast, machine **100** as shown in **Figure 1** provides the technological improvement of positioning bleed-gap **124** at impingement point **150** "passively" with a minimum of hardware and no electronics or software that may add complexity, cost, manufacturing and maintenance servicing and/or reliability issues, as well as added weight and associated performance penalties therefrom. In the embodiment of **Figure 1****,** passively may indicate without electronic control or motored actuation.

The static pressure chart **176** below machine **100** may be helpful to visualize how static pressures read at forward pressure-tap **134** and aft pressure tap **136** control position of carriage **112** and bleed-gap **124.** As a nonlimiting illustration, when airflow **104** is totally subsonic and no shockwave **148** is present (ignore/eliminate shockwave **148** shown in **Figure 1****),** forward pressure-tap **134** may sense static pressure with a value indicated by point **V** on chart **176** and aft pressure-tap **136** may sense static pressure with a value indicated by point **U** on static pressure chart **176.** Bias device **166** may be designed to have characteristics under those conditions that center piston **142** in cylinder **114** and center bleed-gap **124** over length **170** of porous section **122.** In other words, when a differential between static pressure sensed at forward pressure-tap **134** and aft pressure-tap **136** is 15 percent or less, bias device **166** may provide a force that places bleed-gap **124** near a center of length **170** of porous section **122.** In other words, bias device **166** is configured to reset bleed-gap **124** toward a center position when static pressures forward and aft of bleed-gap **124** are not significantly different.

Without limitation, depending upon other design conditions or operating conditions and/or flight envelopes, a designer may prefer that under such conditions carriage **112** and bleed-gap **124** settle closer toward forward carriage-stop **186** and particular characteristics of bias device **166** may be designed to apply forces that produce that outcome. Similarly, other locations may be chosen for a location of carriage **112** and bleed-gap **124** to stabilize at over porous section **122** when values of a static pressure sensed by forward pressure-tap **134** and aft pressure-tap **136** have a relatively minor pressure differential such as between values at point **U** and point **V** or **T** shown in chart **176.**

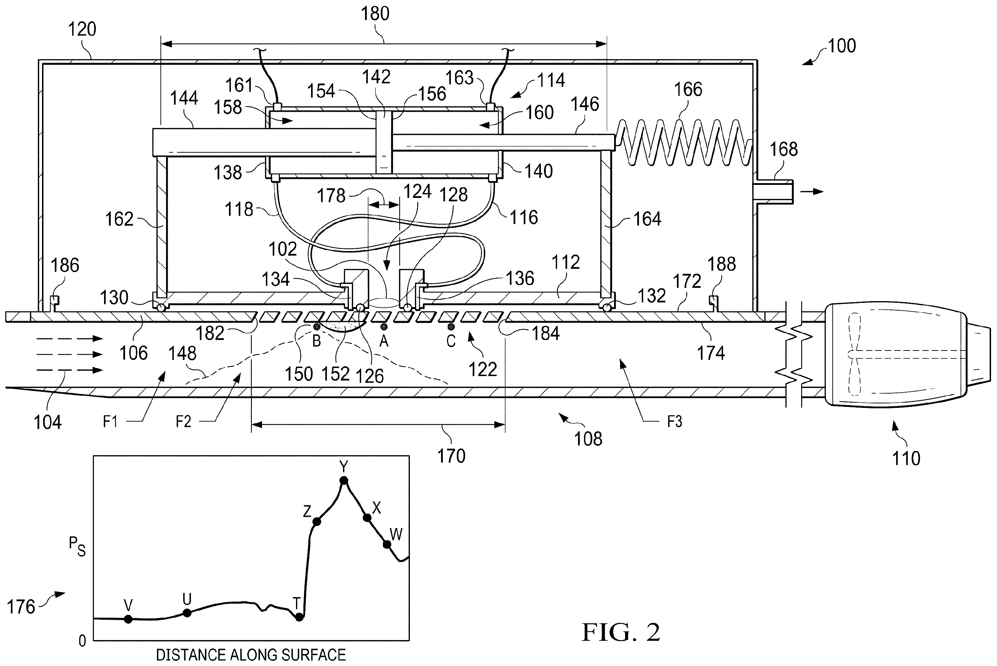

With reference now to **Figure 2****,** a cross-sectional view is shown of a machine configured to bleed-off a mass of air from and airflow along a surface, in accordance with an illustrative embodiment. As compared to **Figure** 1, **Figure 2** shows a condition where impingement point **150** of shockwave **148** has moved up-flow along surface **106** from point **A** to point **B.** Such a movement up-flow of impingement point **150** may be the result of a change in inlet airflow **104** conditions or inlet geometry conditions. Without limitation, movement up-flow of impingement point **150** may be the result of reduction in speed of airflow **104.** Separation **152** will remain near impingement point **150** and is shown in **Figure 2** as compared to **Figure 1** also moved up-flow with impingement point **150.**

Machine **100** provides the technological advantage of responding to movement of shockwave **148** from point **A** to point **B** by moving bleed-gap **124** up-flow toward forward carriage-stop **186** to point **B** to align over impingement point **150** to draw mass **102** out of airflow **104.** Hence in operation, without electronic control or mechanical actuators, machine **100** reacts to changes in static pressure along surface **106** to move carriage **112** and bleed-gap **124.** A reduction of speed of airflow **104** may move shockwave **148** up-flow toward opening of inlet **108.** When shockwave **148** moves up-flow, forward pressure-tap **134** and aft-pressure tap **136** now sense static pressures that have without limitation relative values Y and X respectively.

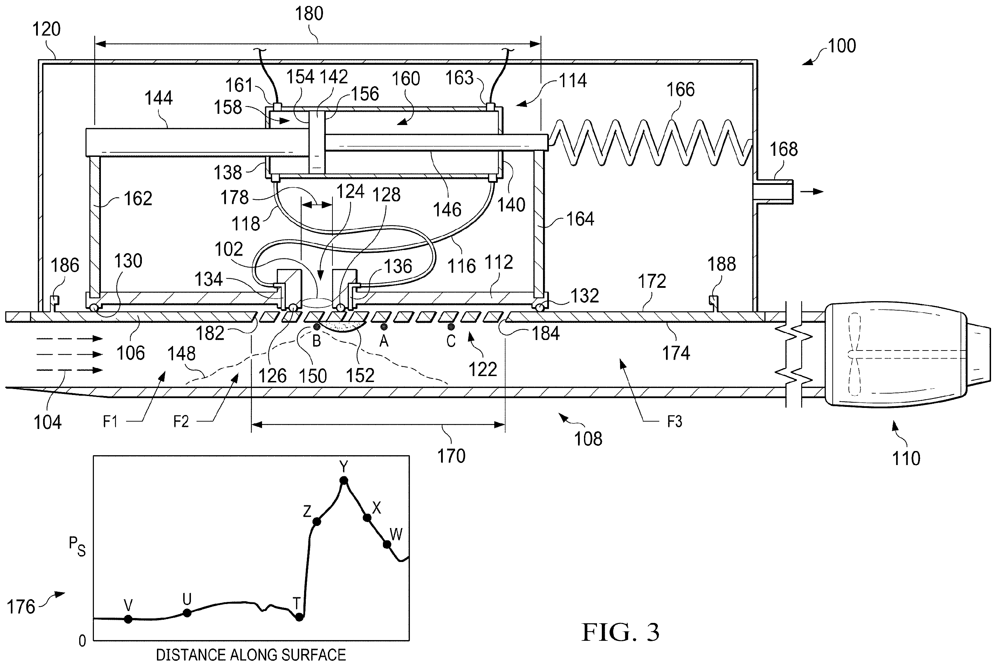

With reference now to **Figure 3****,** a cross-sectional view is shown of a machine configured to bleed-off a mass of air from and airflow along a surface, in accordance with an illustrative embodiment. Specifically, **Figure 3** shows carriage **112** and bleed-gap **124** positioned in reaction to shift of shockwave **148** shown in **Figure 2****.** When forward pressure-tap **134** and aft-pressure tap **136** sensed static pressure Y and X respectively, this causes a greater force on aft area **156** of piston **142** than the force on forward area **154** of piston **142** due to a larger surface area of aft area **156** as compared to forward area **154** and the differentials in the static pressures. As a result, piston **142** moves toward forward end **138** of cylinder **114** and thus moves carriage **112** toward forward carriage-stop **186** and up-flow until differential from static pressure in forward pressure-tap **134** and static pressure in aft pressure tap **136** acting on piston **142,** in combination with force from bias device **166,** stabilize and stop motion of carriage **112** with bleed-gap **124** at impingement point **150** now located at point **B** as shown by **Figure 3****.** In other words, piston **142,** carriage **112,** and bleed-gap **124** move toward impingement point **150** until static pressure at forward pressure-tap **134** drops from a value like point **Y** on chart **176** down to a value like point **Z** on chart **176.** One of ordinary skill in the art recognizes that while actual values of Ps at any marked point in chart **176** and the specific shape of the curve shown in chart **176** may change when supersonic speed of airflow **104** changes, that relative values of static pressure remain close to the distribution shown in chart **176.**

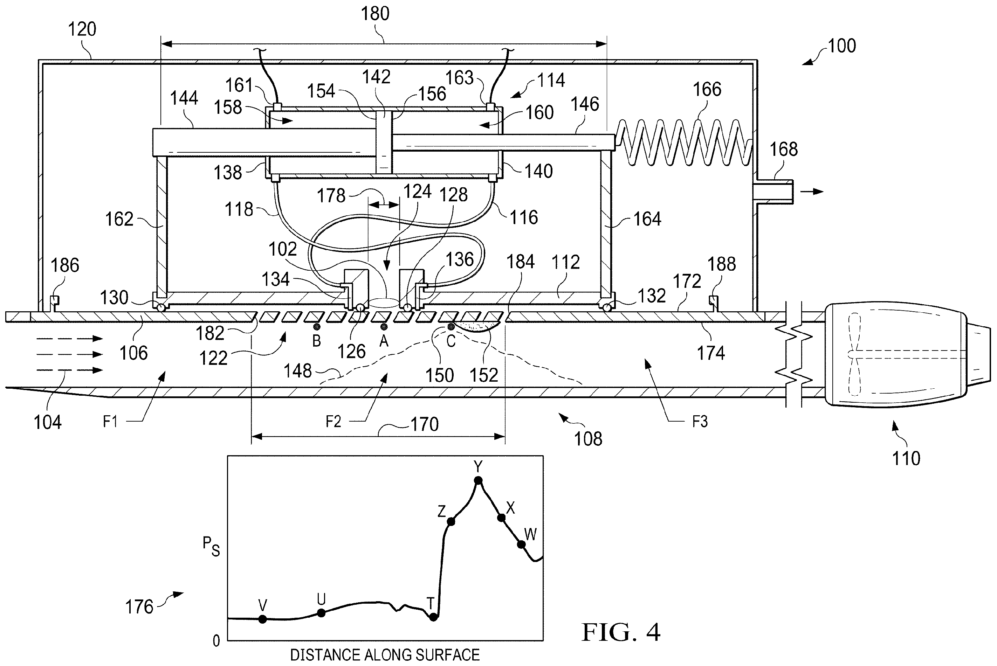

With reference now to **Figure 4****,** a cross-sectional view is shown of a machine configured to bleed-off a mass of air from and airflow along a surface, in accordance with an illustrative embodiment. Specifically, **Figure 4** differs from **Figure 1** by showing a movement of shockwave **148** down-flow from point **A** to point **C.** Without limitation shockwave **148** may move from point **A** to point **C** due to an increase in speed of airflow **104.**

In operation, when shockwave **148** moves down-flow to point **C,** forward pressure-tap **134** and aft-pressure tap **136** now sense static pressures that have without limitation relative values **U** and **V** respectively. As a result of a greater values for Ps at point **U** and force from bias device **166,** piston **142,** carriage **112,** and bleed-gap **124** move down-flow toward aft carriage-stop **188.**

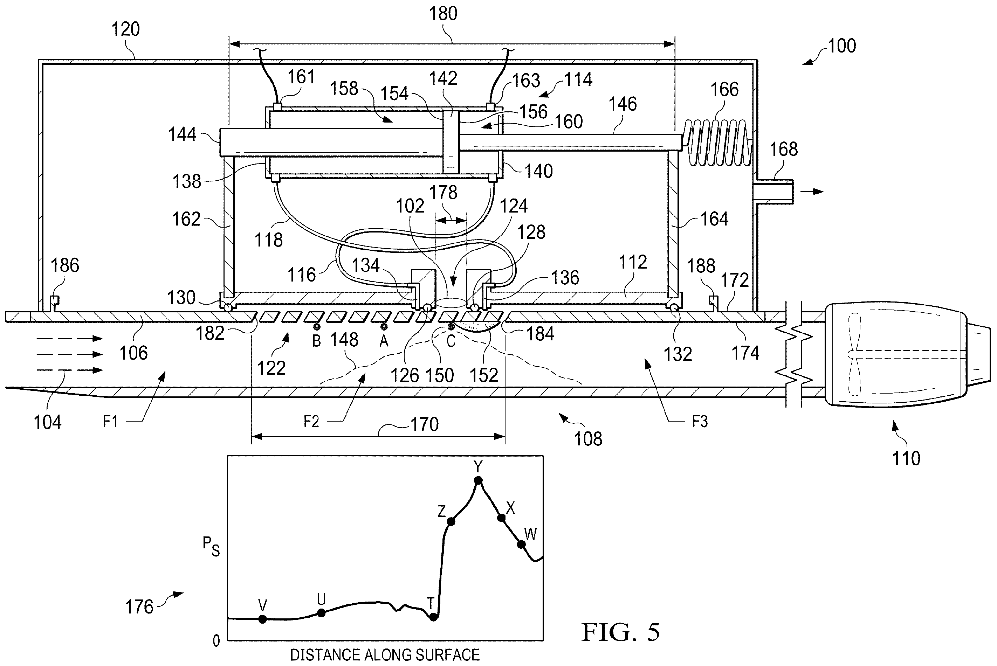

With reference now to **Figure 5****,** a cross-sectional view is shown of a machine configured to bleed-off a mass of air from and airflow along a surface, in accordance with an illustrative embodiment. Specifically, **Figure 5** shows location of carriage **112** and bleed-gap **124** after machine **100** responds to changes in static pressure values in inlet **108** after movement of shockwave **148** from point **A** to point **C.**

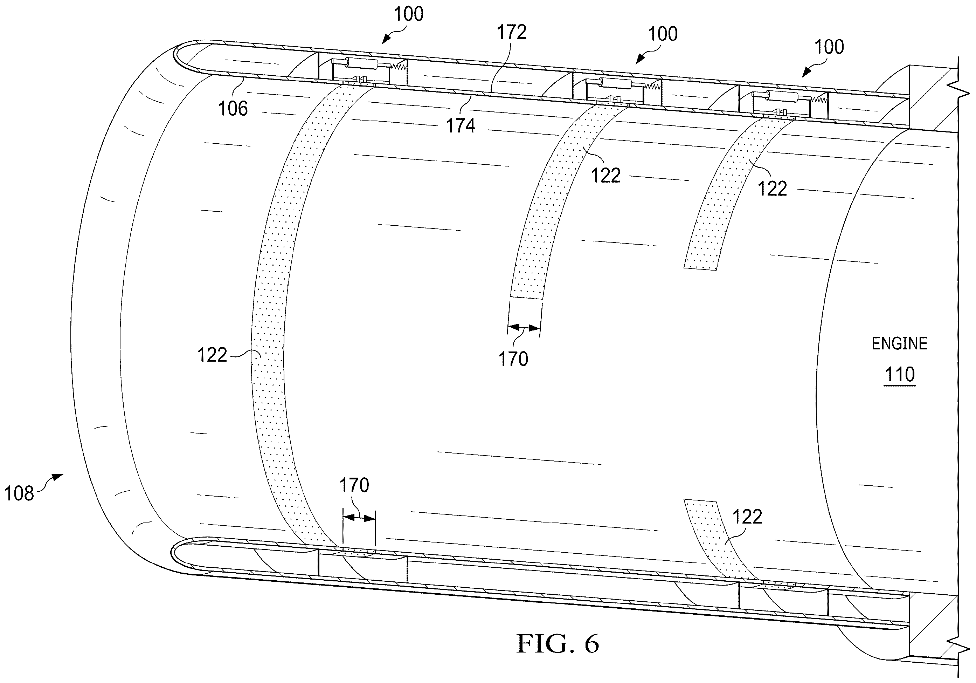

With reference now to **Figure 6****,** a cross-sectional side view is shown of porous sections in a surface, in accordance with an illustrative embodiment. Specifically, surface **106** in **Figure 6** may be an inner wall of inlet **108** to air-breathing engine **110.** **Figure 6** is not intended to show a particular configuration or location of porous section **122** or machine **100.** **Figure 6** shows potential sizes, locations, and/or combinations of sizes and locations for where porous section **122** may be incorporated into surface **106** to bleed off a designed amount of mass **102** from airflow **104** (as shown in Figures 1-5) into air-breathing engine **110.** Design and manufacture of amount, size, and locations for porous section **122** will be designed and manufactured dependent at least upon an expected required mass **102** of air to be bled off from airflow **104** along surface **106.** Required mass **102** of air to be bled off from airflow **104** along surface **106** may be designed/derived based at least upon an expected operating envelope and/or mission and/or speed range for a vehicle using air-breathing engine **110** and/or upon specific mass **102** flow requirements of specifics of air-breathing engine **110.**

In instances where porous section **122** completely encircles inlet **108,** machine **100** may comprise porous section **122** as a ring with carriage **112** (as shown in Figure 1-5 and 7) as a ring (but not illustrated in a ring form), and a number of cylinder **114** with a number of aft pressure-tap **136** and forward-pressure-tap **134** located around ring to move carriage **112.** Where a number of porous section **122** are located in various locations around inlet **108,** each porous section **122** may have its own machine **100.**

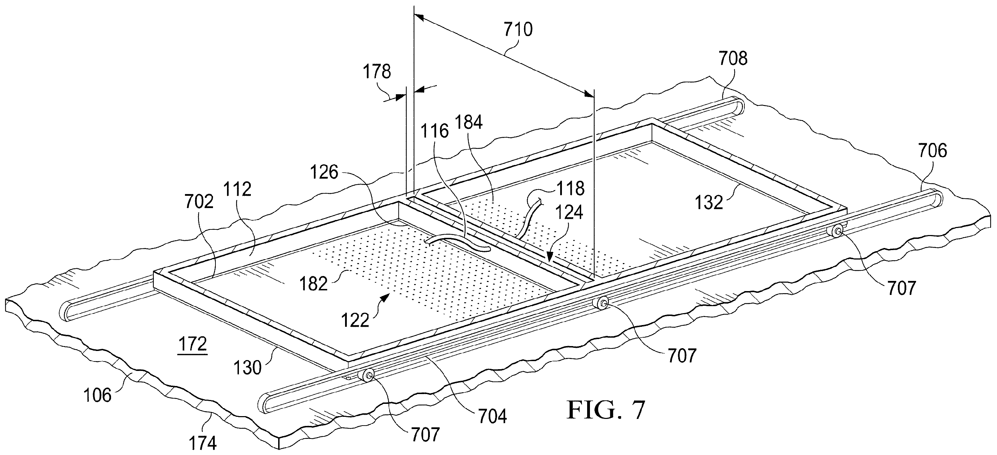

With reference now to **Figure 7****,** a perspective view of a cross-section of a carriage for a bleed air machine is shown in accordance with an illustrative embodiment. Specifically, carriage **112** is shown cross-sectioned below full height to show contact with channel **120** side of surface **106.** Some elements from previous figures such as without limitation: channel **120,** cylinder **114,** and bias device **166** are not shown in **Figure 7** for clarity of viewing carriage **112** and bleed-gap **124** relationship with porous section **122** and surface **106.**

Carriage **112** is held against channel **120** side of surface **106** surrounding porous section **122** such that forward seal **130** and aft seal **132** maintain contact with channel **120** side of surface **106.** Similar to forward seal **130** and aft seal **132,** carriage **112** also has far side seal **702** and near side seal **704** to prevent, in conjunction with forward bleed-gap seal **126** and aft bleed-gap seal **128** (as shown in Figures 1-5), bleed off of any air from airflow **104** through porous section **122** and carriage **112** except at/through bleed-gap **124.**

As a nonlimiting embodiment, rail **706** and rail **708** located outside perimeter of porous section **122** may hold carriage **112** sealed against channel **120** side of surface **106** by engaging translation component **707** on carriage **112.** Translation component **707** is a nonlimiting illustration of a part of carriage **112** that connects carriage **112** to channel **120** side of surface **106** in a manner that allows for movements of piston **142** (as shown in Figures 1-5) to translate carriage **112** such that bleed-gap **124** translates along length **170** of porous section **122.**

Bleed-gap **124** may have an area defined by length **178** of bleed-gap **124** opening between forward bleed-gap seal **126** and aft bleed-gap seal **128** and width **710** of bleed-gap **124** across carriage **112.** The area of bleed-gap **124** will affect an amount of mass **102** bled off from airflow **104** per second and may be designed and manufactured, without limitation, to be between 1 to 25 percent of a mass of inlet **108** captured airflow **104** per second. Length **178** of bleed-gap **124** partially determines precise size of area for bleed-gap **124.** Area for bleed-gap **124** is designed and manufactured based upon desired air mass **102** to be delivered into air-breathing engine **110.** Desired air mass **102** to be delivered into air-breathing engine **110** is determined at least by thrust desired from air-breathing engine **110** and operational envelope for air-breathing engine **110** and/or vehicle powered by air-breathing engine **110.**

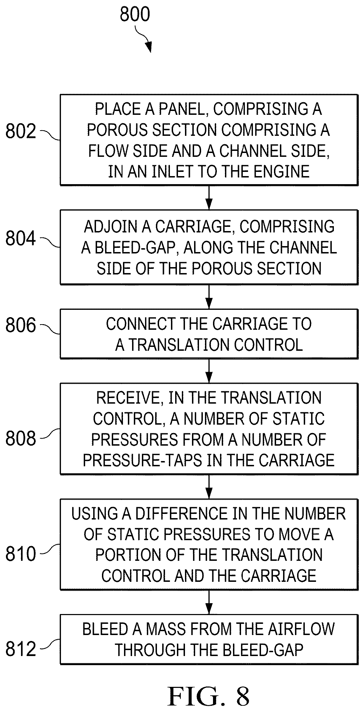

With reference now to **Figure 8, Figure 8** is a block diagram of a flow chart for a process of controlling bleed-off from an airflow to an engine, in accordance with an illustrative embodiment. The process **800** may begin with placing a panel, comprising a porous section comprising a flow side and a channel side, in an inlet to the engine (operation **802).** The process may continue with adjoining a carriage, comprising a bleed-gap, along the channel side of the porous section (operation **804).** The process may continue with connecting the carriage to a translation control(operation **806).** The process may continue with receiving, in the translation control, a number of static pressures from a number of pressure-taps in the carriage (operation **808).** The process may continue with using a difference in the number of static pressures for moving a portion of the translation control and the carriage (operation **810).** The process may continue with bleeding a mass from the airflow through the bleed-gap (operation **812).**

In process **800,** the inlet may be for a jet engine, a turbojet engine, a pulsejet, a ramjet engine, a scramjet engine, or a rotating detonation engine. The translation control may include a cylinder and a piston, wherein the cylinder may include an aft chamber, and the number of pressure-taps may include a forward pressure tap connected to the aft chamber in the cylinder. The airflow may be supersonic. The airflow may flow along a length of the porous section and form a shockwave impinging along the porous section.

Process **800** may also include the translation control translating the carriage adjacent to the channel side of the porous section. The translation control comprises a cylinder that comprises a piston that is connected to: a forward rod connected to a forward rigid link connected to the carriage; and an aft rod connected to an aft rigid link connected to the carriage. In process **800** the cylinder may remain stationary relative to the panel.

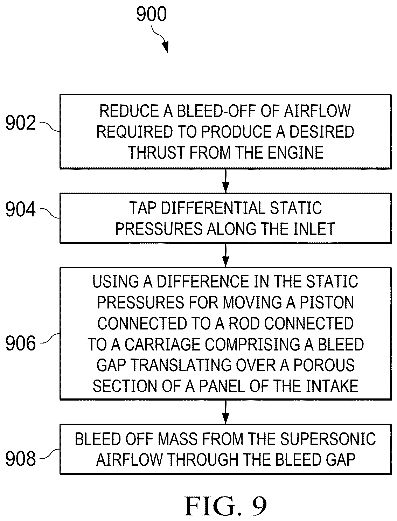

With reference now to **Figure 9, Figure 9** is a block diagram of a flow chart for a process of reducing a drag of an inlet, process **900** may begin with reducing a bleed-off of airflow required to produce a desired thrust from the engine (operation **902)** via at least: tapping differential static pressures along the inlet (operation **904);** using a difference in the static pressures for moving a piston connected to a rod connected to a carriage comprising a bleed gap translating over a porous section of a panel of the intake (operation **906);** and bleeding off mass from the supersonic airflow through the bleed gap (operation **908).** Process **900** may also include the inlet experiencing supersonic airflow and repeating the above process as a changing speed of the supersonic airflow changes a location along the porous section of an impingement of a shockwave.

Hence, embodiments shown above provide at least the technological advantage of controlling a location and a mass of bleed-off from an airflow that is passive in the sense that it requires no electronic or computer controlled activation. Therefore, the embodiments shown above provide at least the technological advantage of being less complicated and more resilient and being lighter than current variable bleed designs. The embodiments shown also above provide the technological advantage of not bleeding-off more mass than is necessary to deliver an optimum mass with required characteristic for an airflow delivered to an engine as compared to current fixed area bleed systems for supersonic flows. Thus, the embodiments shown also above at least provide the technological advantage of a more efficient passive bleed-air system than current designs that enables using an inlet that may be smaller and lighter yet still provide required airflow for a given engine as compared to inlets required using current bleed-air systems.

While the embodiments described above are shown for airflow along a surface in an inlet to an air-breathing engine, one of ordinary skill in the art recognizes that the machine described and processes described below may be applied for airflows into inlets to other than air-breathing engines and/or for air-flows along a surface not located within an inlet. Hence, without limitation machine **100** may be located and applied to air-flow across a wing or other surface that may experience supersonic flow and shockwave **148** and/or separation **152.**

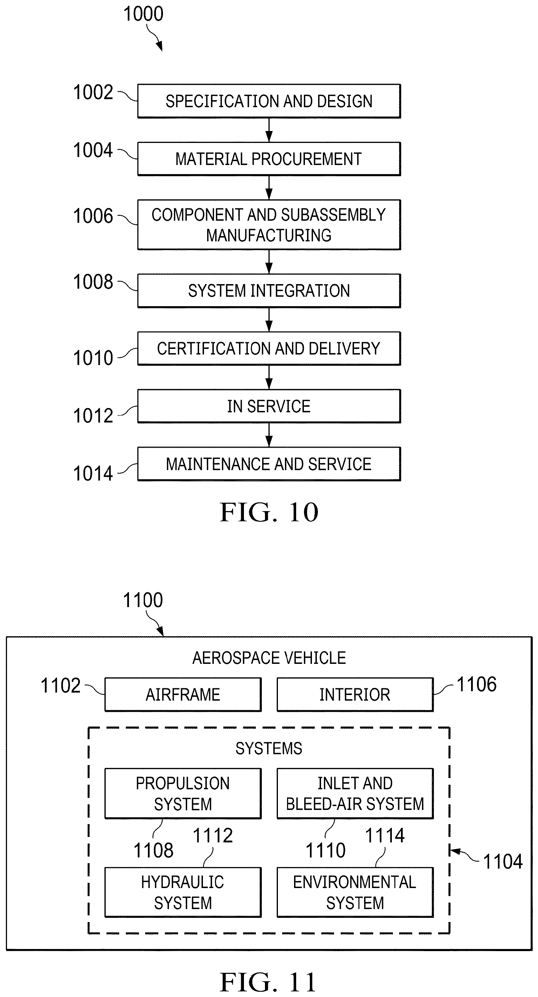

With reference now to **Figure 10****,** illustrative embodiments of the disclosure may be described in the context of aircraft manufacturing and service process as shown in **Figure 10** and aerospace vehicle **1100** as shown in **Figure 11****.** Without limitation aerospace vehicle **1100** may include a manned or an unmanned aircraft. Turning first to **Figure 10****,** an illustration of an aircraft manufacturing and service process is depicted in accordance with an illustrative embodiment. During pre-production, aircraft manufacturing and service process **1000** may include specification and design **1002** of aerospace vehicle **1100 in** **Figure 11** and material procurement **1004.**

During production, component and subassembly manufacturing **1006** and system integration **1008** of aerospace vehicle **1100 in** **Figure 11** takes place. Thereafter, aerospace vehicle **1100 in** **Figure 11** can go through certification and delivery **1010** in order to be placed in service **1012.** While in service **1012** by a customer, aerospace vehicle **1100 in** **Figure 11** is scheduled for routine maintenance and service **1014,** which may include modification, reconfiguration, refurbishment, and other maintenance or service.

Each of the processes of aircraft manufacturing and service process **1000** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 11****,** an illustration of an aircraft is depicted in which an illustrative embodiment may be implemented. In this example, aerospace vehicle **1100** is produced by aircraft manufacturing and service process **1000 in** **Figure 10** and may include airframe **1102** with plurality of systems **1104** and interior **1106.** Examples of systems **1104** include one or more of propulsion system **1108,** inlet and bleed-air system **1110,** hydraulic system **1112,** and environmental system **1114.** Any number of other systems may be included. Although an aerospace example is shown, different illustrative embodiments may be applied to other industries, such as the automotive industry.

Apparatuses and processes embodied herein may be employed during at least one of the stages of aircraft manufacturing and service process **1000** in **Figure 10****.**

In one illustrative example, components or subassemblies produced in component and subassembly manufacturing **1006** in **Figure 10** can be fabricated or manufactured in a manner similar to components or subassemblies produced while aerospace vehicle **1100** is in service **1012 in** **Figure 10****.** As yet another example, one or more apparatus embodiments, process embodiments, or a combination thereof can be utilized during production stages, such as component and subassembly manufacturing **1006** and system integration **1008 in** **Figure 10****.** One or more apparatus embodiments, process embodiments, or a combination thereof may be utilized while aerospace vehicle **1100** is in service **1012,** during maintenance and service **1014 in** **Figure 10****,** or both. The use of a number of the different illustrative embodiments may substantially expedite the assembly of aerospace vehicle **1100,** reduce the cost of aerospace vehicle **1100,** or both expedite the assembly of aerospace vehicle **1100** and reduce the cost of aerospace vehicle **1100.**

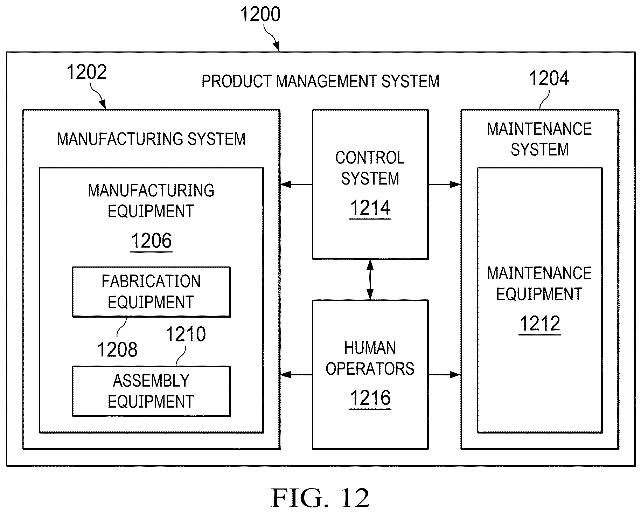

Turning now to **Figure 12****,** an illustration of a block diagram of a product management system is depicted in accordance with an illustrative embodiment. Product management system **1200** is a physical hardware system. In this illustrative example, product management system **1200** includes at least one of manufacturing system **1202** or maintenance system **1204.**

Manufacturing system **1202** is configured to manufacture products, such as aerospace vehicle **1100 in** **Figure 11** and machine **100** therein. As depicted, manufacturing system **1202** includes manufacturing equipment **1206.** Manufacturing equipment **1206** includes at least one of fabrication equipment **1208** or assembly equipment **1210.**

Fabrication equipment **1208** is equipment used to fabricate components for parts used to form aerospace vehicle **1100** in **Figure 11** including without limitation parts of machine **100.** Fabrication equipment **1208** can be used to fabricate at least one of metal parts, composite parts, semiconductors, circuits, fasteners, ribs, skin panels, spars, antennas, or other suitable types of parts.

Assembly equipment **1210** is equipment used to assemble parts to form aerospace vehicle **1100** in **Figure 11****.** In particular, assembly equipment **1210** is used to assemble components and parts to form aerospace vehicle **1100** in **Figure 11****.** Assembly equipment **1210** also can include machines and tools. These machines and tools may be without limitation at least one of a robotic arm, a crawler, a faster installation system, a rail-based drilling system, or a robot. Assembly equipment **1210** can be used to assemble parts such as without limitation machine **100** and/or components thereof, horizontal stabilizers, wings, engines, engine housings, and other parts for aerospace vehicle **1100** in **Figure 11****.**

In this illustrative example, maintenance system **1204** includes maintenance equipment **1212.** Maintenance equipment **1212** can include any equipment needed to perform maintenance on aerospace vehicle **1100** in **Figure 11****.** Maintenance equipment **1212** may include tools for performing different operations on parts such as without limitation machine **100** on aerospace vehicle **1100** in **Figure 11****.** These operations can include at least one of disassembling parts, refurbishing parts, inspecting parts, reworking parts, manufacturing replacement parts, or other operations for performing maintenance on aerospace vehicle **1100** in **Figure 11****.** These operations can be for routine maintenance, inspections, upgrades, retrofit, reconfiguration, refurbishment, or other types of maintenance operations. Hence, design of machine **100** may be for a new aerospace vehicle **1100** or to be retrofit, reconfigured, and or refurbished into inlet **108** of an existing aerospace vehicle **1100.**

In the illustrative example, maintenance equipment **1212** may include ultrasonic inspection devices, x-ray imaging systems, vision systems, drills, crawlers, and other suitable devices. In some cases, maintenance equipment **1212** can include fabrication equipment **1208,** assembly equipment **1210,** or both to produce and assemble parts that are needed for maintenance.

Product management system **1200** also includes control system **1214.** Control system **1214** is a hardware system and may also include software or other types of components. Control system **1214** is configured to control the operation of at least one of manufacturing system **1202** or maintenance system **1204.** In particular, control system **1214** can control the operation of at least one of fabrication equipment **1208,** assembly equipment **1210,** or maintenance equipment **1212.**

The hardware in control system **1214** can be implemented using hardware that may include computers, circuits, networks, and other types of equipment. The control may take the form of direct control of manufacturing equipment **1206.** For example, robots, computer-controlled machines, and other equipment can be controlled by control system **1214.** In other illustrative examples, control system **1214** can manage operations performed by human operators **1216** in manufacturing or performing maintenance on aerospace vehicle **1100.** For example, control system **1214** can assign tasks, provide instructions, display models, or perform other operations to manage operations performed by human operators **1216.** In these illustrative examples, control system **1214** manages at least one of the manufacturing or maintenance of aerospace vehicle **1100** in **Figure 11** to place machine **100** into inlet **108** for aerospace vehicle **1100.** The fuel protection system can be implemented in fuel tanks during manufacturing fuel tanks for adding fuel tanks during maintenance to aerospace vehicle **1100.**

In the different illustrative examples, human operators **1216** can operate or interact with at least one of manufacturing equipment **1206,** maintenance equipment **1212,** or control system **1214.** This interaction can occur to manufacture aerospace vehicle **1100** in **Figure 11****.**

Of course, product management system **1200** may be configured to manage other products other than aerospace vehicle **1100** in **Figure 11****.** Although product management system **1200** has been described with respect to manufacturing in the aerospace industry, product management system **1200** can be configured to manage products for other industries. For example, product management system **1200** can be configured to manufacture products without limitation for the marine industry and/or automotive industry as well as any other suitable industries.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements. Also, where a quantity is specified in both the SI system and United States customary units and there is any discrepancy, the values expressed in United States customary units shall take precedence.

Many modifications and variations will be apparent to those of ordinary skill in the art. Further, different illustrative embodiments may provide different features as compared to other desirable embodiments. The embodiment or embodiments selected are chosen and described in order to clearly explain the principles of the embodiments, the practical application, and to enable others of ordinary skill in the art to understand the disclosure for various embodiments with various modifications as are suited to the particular use contemplated. The scope of protection is determined by the appended claims.

The flowcharts and block diagrams in the different depicted embodiments illustrate the architecture, functionality, and operation of some possible implementations of apparatuses and processes in an illustrative embodiment. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware can, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams can be implemented using special purpose hardware systems that perform the different operations or combinations of special purpose hardware and program code run by the special purpose hardware.
In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram. The scope of protection is determined by the appended claims. Nevertheless, implementations according to the following clauses are also part of the present disclosure:
Clause 1. A machine 100 that comprises:
   a panel 106 that comprises a porous section 122 that comprises:
      a length 170;
      a flow side 174; and
      a channel side 172;
   a channel 120 that surrounds the porous section 122 and contains a carriage 112 adjacent to the panel 106, wherein the carriage comprises:
      a flow side;
      a translation component 707;
      a channel side 172 connected to a first rigid link 162 and to a second rigid link 164;
      a bleed gap 124; and
      a number of pressure taps 134/136;
   a cylinder 114 that comprises:
      a forward end 138;
      an aft end 140;
      a piston 142 connected to:
         a forward rod 144 that extends out of the forward end of the cylinder; and
         an aft rod 146 that extends out of the aft end of the cylinder;
      a number of chambers 158/160; and
   a bias device 166 connected to:
      the aft rod; and
      the channel.
Clause 2. The machine 100 of clause 1, wherein the number of pressure taps comprises a forward pressure-tap 134 located and configured to access a static pressure (Ps) on the flow side of the carriage and up-flow from the bleed-gap.
Clause 3. The machine 100 of clause 1, wherein the number of pressure taps comprises an aft pressure-tap 136 located and configured to access a static pressure (Ps) on the flow side of the carriage and down-flow from the bleed-gap.
Clause 4. The machine of clause 2, wherein the bias device is configured to place the bleed-gap at a center (A) of the length of the porous section with a static pressure value differential between the first pressure tap and the second pressure tap being less than 15 percent.
Clause 5. The machine of clause 2, wherein the cylinder comprises an aft chamber 160 and the forward pressure tap is connected into the aft chamber.
Clause 6. The machine of clause 2, wherein the second pressure tap is connected into the forward chamber.
Clause 7. The machine of clause 1, wherein the bias device is a spring 166.
Clause 8. The machine 100 of clause 1, wherein the carriage comprises a seal 126/128 against the channel side of the panel 106.
Clause 9. The machine of clause 1, wherein the cylinder is fixed relative to the porous section, and the carriage is configured to translate along the panel responsive to a movement of the piston within the cylinder.
Clause 10. The machine of clause 1, wherein the bias is configured to place the bleed gap at a center of the length of the porous section when airflow 104 across the panel remains subsonic.
Clause 11. A process 800 of controlling bleed-off from an airflow 104 to an air-breathing engine 110, the process comprising:
   placing a panel 106, comprising a porous section 122 comprising a flow side 174 and a channel side 172, in an inlet 108 to the engine;
   adjoining a carriage 122, comprising a bleed-gap 124, along the channel side of the porous section;
   connecting the carriage to a translation control 160;
   receiving, in the translation control, a number of static pressures from a number of pressure-taps 134/136 in the carriage;
   using a difference in the number of static pressures for moving a portion 142 of the translation control and the carriage; and
   bleeding a mass 102 from the airflow through the bleed-gap.
Clause 12. The process of clause 11, further comprising the inlet providing airflow to one of [0032]: a jet engine, a turbojet engine, a pulsejet, a ramjet engine, a scramjet engine, or a rotating detonation engine.
Clause 13. The process of clause 11, wherein the translation control comprises a cylinder 114 that comprises an aft chamber 160, and the number of pressure-taps comprises a forward pressure tap 134 connected to the aft chamber in the cylinder.
Clause 14. The process of clause 11, wherein the airflow flows along a length 170 of the porous section and forms a shockwave impinging along the porous section.
Clause 15. The process of clause 11, further comprising the translation control translating the carriage adjacent to the channel side of the porous section.
Clause 16. The process of clause 11, wherein the airflow is supersonic [0069].
Clause 17. The process of clause 11, wherein the translation control comprises a cylinder 114 that comprises a piston 142 that is connected to:
   a forward rod 144 connected to a forward rigid link 162 connected to the carriage; and
   an aft rod 146 connected to an aft rigid link 164 connected to the carriage.
Clause 18. The process of clause 17, further comprising the cylinder remaining stationary relative to the panel.
Clause 19. A process 900 of reducing a drag of an inlet 108, the process comprising reducing a bleed-off 102 of airflow 104 required to produce a desired thrust from the engine;
   tapping differential static pressures along the inlet;
   using a difference in the static pressures for moving a piston 142 connected to a rod 144/146 connected to a carriage comprising a bleed gap 124 translating over a porous section 122 of a panel 106 of the intake; and
   bleeding off mass 102 from the supersonic airflow through the bleed gap.
Clause 20. The process of clause 19, further comprising:
   the inlet experiencing supersonic airflow 104; and repeating the above process as a changing speed of the supersonic airflow changes a location (A,B,C) along the porous section of an impingement 150 of a shockwave 148.

## Claims

1. A machine (100) that comprises:
a panel (106) that comprises a porous section (122), said porous section (122) comprising:
a length (170);
a flow side (174); and
a channel side (172);
a channel (120) that surrounds the porous section (122) and contains a carriage (112) adjacent to the panel (106), wherein the carriage (112) comprises:
a flow side;
a translation component (707);
a channel side connected to a first rigid link (162) and to a second rigid link (164);
a bleed gap (124); and
a number of pressure taps (134/136);
a cylinder (114) that comprises:
a forward end (138);
an aft end (140);
a piston (142) connected to:
a forward rod (144) that extends out of the forward end (138) of the cylinder (114); and
an aft rod (146) that extends out of the aft end (140) of the cylinder (114);
a number of chambers (158/160); and
a bias device (166) connected to:
the aft rod (144); and
the channel (120).

2. The machine (100) of claim 1, wherein the number of pressure taps (134/136) comprises a forward pressure-tap (134) located and configured to access a static pressure (Ps) on the flow side of the carriage (112) and up-flow from the bleed-gap (124).

3. The machine (100) of claim 1 or 2, wherein the number of pressure taps (134/136) comprises an aft pressure-tap (136) located and configured to access a static pressure (Ps) on the flow side of the carriage (112) and down-flow from the bleed-gap (124).

4. The machine (100) of claim 2, wherein the cylinder comprises an aft chamber (160) and the forward pressure tap (134) is connected into the aft chamber (160).

5. The machine of claim 3, wherein the cylinder comprises a forward chamber (158) and the aft pressure tap (136) is connected into the forward chamber (158).

6. The machine (100) of any one of claims 1 to 5, wherein the bias device (166) is a spring.

7. The machine (100) of any one of claims 1 to 6, wherein the carriage (112) comprises a seal (126/128) against the channel side (172) of the panel (106).

8. The machine (100) of any one of claims 1 to 7, wherein the cylinder (114) is fixed relative to the porous section (122), and the carriage (112) is configured to translate along the panel (106) responsive to a movement of the piston (142) within the cylinder (114).

9. The machine (100) of claim 8, wherein the bias device (166) is configured to place the bleed-gap (124) at a center (A) of the length (170) of the porous section (122) with a static pressure value differential between a first pressure tap (134) and a second pressure tap (136) being less than 15 percent.

10. The machine of claim 8 or 9, wherein the bias device (166) is configured to place the bleed gap (124) at a center (A) of the length (170) of the porous section (122) when airflow (104) across the panel (106) remains subsonic.

11. A process (800) of controlling bleed-off from an airflow (104) to an air-breathing engine (110), preferably a jet engine, a turbojet engine, a pulsejet, a ramjet engine, a scramjet engine, or a rotating detonation engine, the process comprising:
placing a panel (106), comprising a porous section (122) comprising a flow side (174) and a channel side (172), in an inlet (108) to the engine (110);
adjoining a carriage (122), comprising a bleed-gap (124), along the channel side (172) of the porous section (122);
connecting the carriage (112) to a translation control (114, 142, 158, 160);
receiving, in the translation control (114, 142, 158, 160), a number of static pressures from a number of pressure-taps (134/136) in the carriage (112);
using a difference in the number of static pressures for moving a portion (142) of the translation control (114, 142, 158, 160) and the carriage (112); and
bleeding a mass (102) from the airflow (104) through the bleed-gap (124).

12. The process (800) of claim 11, wherein at least one of:
the translation control (114, 142, 158, 160) comprises a cylinder (114) that comprises an aft chamber (160), and the number of pressure-taps (134/136) comprises a forward pressure tap (134) connected to the aft chamber (160) in the cylinder (114);
and/or
the translation control (114, 142, 158, 160) comprises a cylinder (114) that comprises a piston (142) that is connected to:
a forward rod (144) connected to a forward rigid link (162) connected to the carriage (112); and
an aft rod (146) connected to an aft rigid link (164) connected to the carriage;
and/or
wherein the cylinder (114) remains stationary relative to the panel (106).

13. The process (800) of claim 11 or 12, further comprising flowing a supersonic airflow along a length (170) of the porous section (122) to form a shockwave impinging along the porous section (122).

14. The process of any one of claims 11 to 13, further comprising the translation control (114, 142, 158, 160) translating the carriage (112) adjacent to the channel side (172) of the porous section (122).

15. The process (800, 900) of claim 13 wherein, as a changing speed of the supersonic airflow changes a location (A,B,C) along the porous section (122) of an impingement (150) of a shockwave (148), the process (900) further comprising reapeating the following steps for reducing a drag of an inlet (108) to an air-breathing engine (110):
using a difference in the number of static pressures for moving a portion (142) of the translational control (114, 142, 158, 160) and the carriage; and
bleeding off mass (102) from the supersonic airflow through the bleed gap (124).
